# EUROPEAN PATENT APPLICATION

(11) **EP 2 916 023 A1**
(43) Date of publication of application: **09.09.2015**
(21) Application number: 14397510.0
(22) Date of filing: 06.03.2014
(51) Int. Cl.: F16D 7/04, A47K 10/36, F16D 41/12, F16D 43/208

(54) **A resilient pawl for a dispenser mechanism, a dispenser mechanism and a dispenser**

(71) Applicant: Achton Spain SL, 03201 Alicante (ES)
(72) Inventor: Achton, Kim, 4540 FÅREVEJLE (DK)
(74) Representative: Langenskiöld, Tord Karl Walter

(57) **Abstract**

The present invention concerns a pawl for a gear-and-pawl -type ratchet mechanism. The pawl (2) is made of a resilient material which enables it to reversibly deform when an excessive force is exerted on it by the gear (3) due to rotation of the gear-and-pawl -type ratchet mechanism in a non-operating direction. The present invention also concerns a dispensing mechanism (1) for a paper dispense equipped with a gear-and-pawl -type ratchet mechanism having such a resilient pawl, and a paper dispenser equipped with such a dispensing mechanism.

## Description

### Field of the Invention

The present invention relates to paper dispensers. More specifically, the present invention relates to paper dispensers equipped with dispensing mechanism having a gear-and-pawl-type ratchet mechanism for preventing the dispensing mechanism from being rotated in a non-operating direction. The present invention also concerns a resilient pawl for such mechanism.

### Prior Art

Paper dispensers having a dispensing mechanism with a drive roller, such as a dispensing drum are well known in the art. A dispensing drum commonly both feeds and cuts paper web into sheets and may be actuated in various ways, such as manually using a turn knob, with an electric motor or by using a spring loaded mechanism activated by a user pulling on a tail of the paper. The dispensing drum holds a cutting knife which rapidly extends from the drum, thus cutting the paper running along the periphery of the drum. Conventionally each revolution of the dispensing drum corresponds to the length of a paper sheet, so that the cutting knife is extended and retracted once per each revolution. The dispensing drum is often also a driving element, meaning that its pulls paper from the paper supply and feeds it further to a user.

Such kinds of paper dispensers are commonly equipped with manual rotating means for manually rotating the drive roller, even if the dispensing mechanism is primarily actuated by other means. Rotating the drive roller manually may be necessary in the event of an unwanted tear of the paper. This is particularly relevant, when a dispensing drum is primarily actuated by a user pulling on the tail of the paper. Another situation where the drive roller has to be rotated manually is when a new paper roll is introduced to the dispenser and the paper web has to be threaded through the dispensing mechanism.

To avoid misuse, the manual rotating means is often coupled to the drive roller via a one-way clutch allowing the manual rotating means to be rotated in only one direction. Rotating the dispensing drum in the wrong direction can cause the paper web to unthread from the dispensing mechanism or even damage the dispensing mechanism, depending on its structure. Also, equipping manual rotating means with a one-way clutch makes threading the dispensing mechanism more simple to the operator replacing a new paper roll to the dispenser as the turn knob can only be rotated in the correct direction. Common ways of implementing a one-way clutch are using a free wheel mechanism, such as a gear-and-pawl -type ratchet, or a wrap spring clutch.

On the other hand, the drive roller might have to be rotated in an opposite direction during certain situations. For example, the paper web may have to be pulled out from the inlet side of the dispensing mechanism in connection with replacing a paper roll. Occasionally, a paper blockage may also occur, and again, the paper web may have to be pulled out of the dispensing mechanism from the inlet side. To enable such an operation, the one-way clutch of the manual rotating means has to be releasable.

A particular problem associated with paper dispensers intended for public sanitary facilities is that they must withstand a certain amount of rough handling or even mischief. Turn knobs equipped with one-way clutches have been discovered to be especially prone to breakage under excessive forces. When a one-way clutch mechanism breaks the whole dispenser often has to be replaced.

### Objects of the Invention

An object of the present invention is to overcome the above-identified problems associated with the dispensers and mechanisms of the prior art by providing a paper dispenser, a mechanism for a paper dispenser, and a resilient pawl for a gear-and-pawl -type ratchet mechanism suitable for a dispensing mechanism, in which manual rotating means may be freely rotated in an operating direction while preventing rotation in a non-operating direction unless a force exceeding a certain amount is applied to the manual rotating means in the non-operating direction. The amount of force required to rotate the manual rotating means in the non-operating direction should be sufficiently large enough to prevent undesirable rotation in said non-operating direction, yet small enough not to cause breakage of any components

A particular object is to provide a pawl for a gear-and-pawl -type ratchet mechanism, which can withstand an excessive force exerted on it by the gear due to rotation of the gear-and-pawl -type ratchet mechanism in a non-operating direction. This object is achieved by making the pawl from a resilient material that enables the pawl to reversibly deform under such conditions.

Another particular object of the present invention is to provide a dispensing mechanism for a paper dispenser with manual rotation means, in which the manual rotating means is equipped with a gear-and-pawl type ratchet mechanism that prevent the manual rotating means from being rotated in a non-operating direction and which dispensing mechanism is able to withstand an excessive rotation force applied on the manual rotating means in an non-operating direction. This object is achieved by equipping the gear-and-pawl type ratchet mechanism of the dispensing mechanism with a resilient pawl according to the present invention.

A further particular object of the present invention is to provide a paper dispenser having manual rotating means, which dispenser can withstand excessive forces exerted on the manual rotating means in a non-operating direction. This object is achieved by equipping such a dispenser with a dispensing mechanism having a gear-and-pawl -type ratchet mechanism comprising a resilient pawl according to the present invention.

Further embodiments, objects and advantages of the present invention will become apparent from the appended dependent claims.

A paper dispenser according to the present invention overcomes the drawbacks of the prior art without the need for complex and expensive one-way clutch mechanisms.

### Brief Description of the Drawing

The invention is described hereafter with reference to the following figures, where:

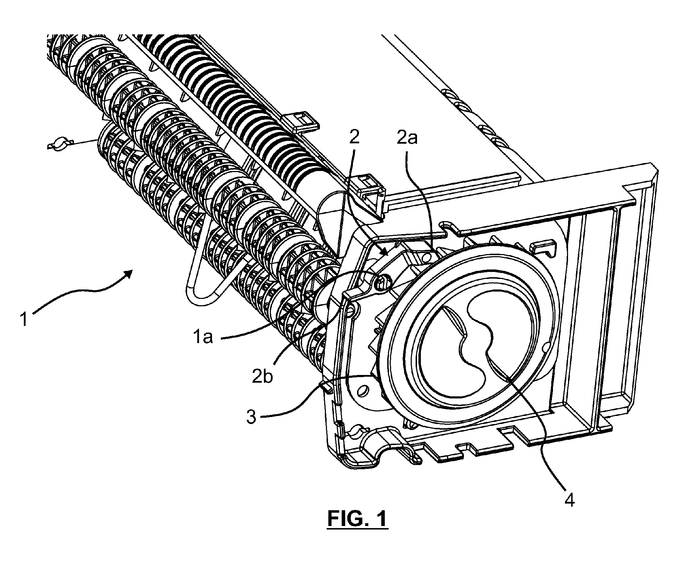

Fig. 1 shows a perspective view of a portion of a dispensing mechanism and deformable pawl according to an embodiment of the invention;

It should be noted that the above mentioned figure is illustrated in a simplified manner for the purpose of clarity.

### Detailed Description of the Invention

Fig. 1 illustrates a side portion of a dispensing mechanism 1 of a paper dispenser equipped with a pawl 2 and gear 3. For illustrative purposes the rest of the paper dispenser is not shown in Fig. 1. The dispensing mechanism further comprises a turn knob 4 coupled to a drive roller (not shown) within the dispensing mechanism. The turn knob 4 is equipped with the gear 3. The pawl 2, together with the gear 3, are a part of a gear-and-pawl -type ratchet mechanism which allows the drive roller to be rotated in an operating direction, while preventing the drive roller from being rotated in a non-operating direction. The pawl 2 has a portion 2a for engaging with the gear 3, and a protruding release lever portion 2b located substantially at the opposite side of the pawl 2 from the engaging portion 2a.

The pawl 2 is pivotally connected to the dispensing mechanism 1 at a point between the release lever portion 2b and the portion 2a engaging with the gear 3. In Fig. 1 the pivotal connection is achieved with a pin 1a protruding from the dispensing mechanism 1 and extending through a recess in the pawl 2. This way the portion 2a of the pawl 2 can be pivoted away from the gear 3 by pressing the release lever portion 2b to disengage the gear-and-pawl type ratchet mechanism.

The drive roller is the component that drives the mechanism, i.e. pulls the web in to the mechanism and dispenses it further. The drive roller may be a roll or a drum of any kind. For example, it could be a dispensing drum that has an extracting / retracting knife that cuts the dispensed web into sheets, or a simple roller. Preferably, the drive roller has a grip surface that frictionally engages with the web.

Instead of, or in addition to the turn knob 4, other manual rotating means, such as a push bar, could be used for manually rotating the drive roller. It should also be noted, that the manual rotating means could also be a secondary way of actuating the drive roller. The drive roller may be primarily actuated by, for example, an electric motor or a user pulling on the tail of the web to be dispensed.

According to a first aspect of the present invention, a pawl 2 for a gear and pawl -type ratchet mechanism is made of a resilient material. This allows the pawl 2 to reversibly deform when an excessive force is exerted on it by the gear due to rotation of the gear-and-pawl -type ratchet mechanism in a non-operating direction. When the pawl 2 is allowed to deform, it prevents the gear-and-pawl -type ratchet mechanism from breaking.

In order for such resiliency to be achieved, it has been found that the pawl 2 should preferably be made of a material having a Shore A hardness of no more than 60. More preferably the pawl 2 is made of a material having a Shore A hardness of no more than 55. Most preferably the pawl 2 is made of a material having a Shore A hardness of no more than 50.

In order for the pawl to function desirably, it should not deform too easily. In other words, it should not preferably be too resilient. If the pawl 2 deforms too easily, an associated dispenser may be subjected to unintentional misuse. It has been found that a pawl 2 made of material having a Shore A hardness of preferably at least 25 exhibits sufficient rigidity in order to function adequately. More preferably the pawl 2 is made of a material having a Shore A hardness of at least 35. Most preferably the pawl 2 is made of a material having a Shore A hardness of at least 45.

Suitable materials for providing a pawl 2 with adequate properties have been proven to be found in a group consisting of plastic materials and elastomeric materials. For example, thermoplastic elastomers may be used. Particularly hydrogenated styrene block copolymers have been considered to be suitable for producing a pawl 2 having adequate properties. Advantageously, styrenic thermoplastic block copolymers, such as SEBS or SEPS, for example, may be used.

The pawl 2 may also comprise a protruding release lever portion 2b. The purpose of the release lever portion 2b is to enable the pawl to be disengaged from the gear-and-pawl -type ratchet mechanism by actuating the release lever portion 2b, thus causing the portion 2a that engages with the gear 3 to pivot away from said gear 3.

According to a second aspect of the present invention, a dispensing mechanism for a paper dispenser comprises a drive roller capable of feeding a paper web material. In other words, the drive roller, when rotated in the operating direction, pulls a paper web from a reservoir, such as a roll, and feeds it onwards to be dispensed. Such a dispensing mechanism further comprises a manual rotating means coupled to said drive roller so that the drive roller may be manually rotated. The manual rotating means is equipped with a gear-and-pawl -type ratchet mechanism for preventing the drive roller from being rotated in a non-operating direction. Rotation in the non-operating direction is undesirable, because it will cause the paper web to be dispensed to become unthreaded from the mechanism. Subsequently, the associated dispenser can not be used until the paper web is rethreaded to the dispensing mechanism by maintenance personnel. Most importantly, the dispensing gear-and-pawl -type ratchet mechanism of the dispensing mechanism 1 is equipped with a resilient pawl 2 as described in any of the embodiments above. This prevents the gear-and-pawl -type ratchet mechanism from breaking due to an excessive rotation force applied on the manual rotating means in the non-operating direction.

Preferably, the manual rotating means comprises a turn knob 4 for facilitating manual rotation. Other ways of implementing the manual rotating means are, for example, a push bar, or a lever. Naturally, any element or device enabling the drive roller to be manually rotated may be utilized.

The dispensing mechanism 1 may have to be rotated in the non-operating direction during maintenance or in order to thread paper web. For this reason, the pawl 2 is preferably pivotally connected to said mechanism 1 at a point of the pawl 2 between said release lever portion 2b and a portion 2a of the pawl engaging with the gear 3 of the gear-and-pawl -type ratchet mechanism. This enables the pawl to be pivoted away from the gear by pressing the release lever portion in order to disengage the gear-and-pawl -type ratchet mechanism. The pivotal connection may be provided, for example with a pin 1a protruding from the dispensing mechanism 1 and a corresponding recess in the pawl 2 for receiving the pin. Alternatively, a pin could extend from the pawl 2, while the dispensing mechanism 1 could be equipped with a recess for receiving the pin.

Preferably, the engaging portion 2a of the pawl 2 is biased towards the gear, for example, by gravity or a resilient biasing member, such as a spring.

According to a third aspect of the invention, a paper dispenser for dispensing a paper web comprises a body having an outlet from which the paper web is dispensed to a user. The body further defines a space for holding a paper web reservoir, such as a paper roll or a folded stack. The dispenser comprises a dispensing mechanism according to any of the embodiments discussed above for dispensing a paper web from the paper web reservoir to the outlet.

The paper dispenser may be equipped with a housing that substantially covers the paper dispenser. Preferably, the housing comprises at least one opening that exposes the outlet. The housing may comprise at least one opening for exposing said turn knob so that a user can manually advance the paper web. Depending on the type of the dispenser and the dispensing mechanism it may desirable to necessary equip the housing with at least one opening for exposing the release lever portion 2b of the pawl 2.

## Claims

1. A pawl for a gear-and-pawl -type ratchet mechanism, **characterized in that** said pawl is made of a resilient material for enabling it to reversibly deform when an excessive force is exerted on it by the gear due to rotation of the gear-and-pawl - type ratchet mechanism in a non-operating direction

2. A pawl according to claim 1, **characterized in that** said resilient material has a Shore A hardness of preferably no more than 60, more preferably no more than 55, most preferably no more than 50.

3. A pawl according to claim 1 or 2, **characterized in that** said resilient material has a Shore A hardness of preferably at least 25, more preferably at least 35, most preferably at least 45.

4. A pawl according to claims 1-3, **characterized in that** said resilient material is chosen from a group consisting of plastic materials and elastomeric materials.

5. A pawl according to claims 1-4 **characterized in that** said pawl comprises a protruding release lever portion

6. A dispensing mechanism for a paper dispenser, comprising:
- a drive roller for feeding a paper web material
- manual rotating means coupled to said drive roller for manually rotating said drive roller,
wherein said manual rotating means is equipped with a gear-and-pawl -type ratchet mechanism for preventing the drive roller from being rotated in non-operation direction, **characterized in that** said gear-and-pawl -type ratchet mechanism is equipped with a pawl according to any of the claims 1 - 4 for preventing said gear-and-pawl -type ratchet mechanism from breaking due to an excessive rotation force applied on the manual rotating means in an non-operating direction.

7. A dispensing mechanism according to claim 6, **characterized in that** said manual rotating means is further equipped with a turn knob for facilitating manual rotation

8. A dispensing mechanism according to claims 6 or 7, **characterized in that** said pawl is pivotally connected to said mechanism at a point of the pawl between said release lever portion and a portion of the pawl engaging with the gear of the gear-and-pawl -type ratchet mechanism for enabling the pawl to be pivoted away from the gear by pressing the release lever portion in order to disengage the gear-and-pawl -type ratchet mechanism.

9. A paper dispenser for dispensing a paper web, comprising a body having an outlet, said body further defining a space for holding a paper web reservoir, **characterized in that** said paper dispenser further comprises a dispensing mechanism according to claims 6 - 8 for dispensing a paper web from said paper web reservoir to said outlet.

10. A paper dispenser according to claim 9 for dispensing a paper web, further comprising a housing for substantially covering said paper dispenser.

11. A paper dispenser according to claim 10, wherein said housing comprises at least one opening for exposing said outlet.

12. A paper dispenser according to claim 9 or 10, wherein said housing comprises at least one opening for exposing said turn knob.

13. A paper dispenser according to claim 9 - 11, wherein said housing comprises at least one opening for exposing said protruding release lever portion
